# EUROPÄISCHE PATENTSCHRIFT

(11) **EP 0 976 594 B1**
(45) Veröffentlichungstag und Bekanntmachung des Hinweises auf die Patenterteilung: **08.01.2003**
(21) Anmeldenummer: 99114511.1
(22) Anmeldetag: 24.07.1999
(51) Int. Cl.: B60J 5/10, B62D 33/037

(54) **Laderaumtür**
Cargo door
Porte de chargement

(30) Priorität: 27.07.1998 DE 29813289 U
(43) Veröffentlichungstag der Anmeldung: 02.02.2000
(73) Patentinhaber: PWP SA, CH-1530 Payerne (CH)
(72) Erfinder: Schäfer, Götz, 1530 Payerne (CH)
(74) Vertreter: Müller, Enno, Dipl.-Ing.

(56) Entgegenhaltungen:
- DE-A- 19 613 092
- DE-U- 9 110 532
- DE-U- 9 419 874
- US-A- 4 403 452

## Beschreibung

Die Erfindung betrifft eine Laderaumtür entsprechend dem in EP-A2 0698515 offenbarten Oberbegriff des Anspruchs 1, mit einer dem Laderaum in Verschlußposition zugewandten Innenwand, mit einer Außenwand und mit Stirnwänden, wobei an einem Außenrand der Laderaumtür ein Scharnier mit einem um zwei Drehachsen drehbaren Scharnierglied angeordnet ist und die Laderaumtür eine Dichtwandung zur dichtenden Zusammenwirkung mit einer Gegenwandung aufweist.

Eine gattungsgemäße Laderaumtür ist aus der EP-A2 0 698 515 bekannt. Trotz zahlreicher Vorteile der vorbekannten Laderaumtür muß bei dieser von einer eine Schließbewegung vornehmenden Person eine bestimmte Verdrehfolge um die beiden Drehachsen beachtet werden, um eine möglichst schonende Anlage der Dichtwandung an die Gegenwandung des Kastenaufbaues zu erreichen. Es besteht daher ein Bedarf an einer Laderaumtür, bei welcher eine Schließbewegung selbsttätig zu einer möglichst schonenden Anlage der dichtend zusammenwirkenden Wandungen führt. Weiterhin besteht bei der bekannten Laderaumtür der Wunsch, ein Abstehen von Betätigungselementen (Handhaben) einer Verriegelungsvorrichtung in unbestimmte Richtungen zu vermeiden, da davon eine Verletzungsgefahr für den Benutzer und eine Beschädigungsgefahr der Laderaumaußenwand bei einem Öffnen der Laderaumtür um 270° ausgehen kann. Darüber hinaus sind bei der bekannten Laderaumtür zwischen zwei benachbarten Türflügeln dichtend zusammenwirkende Wandungen insbesondere Spritzwasser und Steinschlag ausgesetzt. Weiterhin besteht der Wunsch, bei einer Verschwenkbewegung den türseitigen Angriff zu erleichtern.

Es ist Aufgabe der Erfindung, eine gattungsgemäße Laderaumtür in der Weise weiterzubilden, daß ein besserer Schutz für die dichtend zusammenwirkenden Wandungen erreicht und eine vorteilhaftere Handhabung ermöglicht werden.

Gelöst ist die Aufgabe zunächst bei dem Gegenstand des Anspruches 1. Vorteilhafte Weiterbildungen sind in den Unteransprüchen angegeben. Es ist zunächst darauf abgestellt, daß an der scharnierseitigen Stirnwand der Laderaumtür ein Nocken für eine Anlage an einer Anlagefläche des Kastenaufbaues ausgebildet ist, welcher mit einer Randfläche in einer zu der scharnierseitigen Stirnwand senkrechten Richtung über die scharnierseitige Stirnwand übersteht. Ein derartiger überstehender Nocken dient insbesondere bei einer Verschließbewegung der Laderaumtür zumindest in einem bestimmten Drehwinkelbereich als eine Anlage gegen eine Anlagefläche des Kastenaufbaus, welche bevorzugt im Randbereich der Türöffnung angeordnet ist. Die Anlage des Nockens erfolgt bevorzugt als eine drehbare und verschiebliche Anlage, so daß die Anlage zwischen Nocken und Anlagefläche gemeinsam mit den beiden Drehachsen in einer dazu senkrechten Ebene ein Dreigelenk bildet. Die Anlage zwischen Nocken und Anlagefläche bewirkt eine Abstützung der Laderaumtür, durch die bei einer weiteren Verschließbewegung der Laderaumtür in Verbindung mit den beiden Drehachsen eine eindeutige Bewegungsform der Laderaumtür vorgegeben ist, welche beim Erreichen der Schließposition zu einer im wesentlichen flächennormalen Annäherung bzw. Kontakt der Dichtwandung mit der Gegenwandung führt. Entsprechend wird bei einer von der Verschiebeposition ausgehenden Öffnungsbewegung der Laderaumtür ein im wesentlichen flächennormales und dadurch schonendes Abheben der Dichtwandung von der Gegenwandung erreicht. Eine optimale Wahl der durch das Dreigelenk bestimmten Bewegungsform kann dabei insbesondere durch eine gezielte Abstimmung der Abstände zwischen den Drehachsen untereinander, zwischen den einzelnen Drehachsen und den für die Anlage ausgewählten Oberflächenbereichen des Nockens sowie zwischen dem Nocken und der Dichtwandung erreicht werden. In einer vorteilhaften Ausgestaltung ist vorgesehen, daß der Nocken eine dem Laderaum in Verschlußposition zugewandte Innenfläche aufweist, welche in einer Randkante in die Randfläche übergeht und daß sich die Randfläche von der Randkante unter zumindest teilweiser Überdeckung der scharnierseitigen Stirnwand zu der scharnierseitigen Stirnwand erstreckt. Weiterhin besteht auch die Möglichkeit, daß die Innenfläche senkrecht zu der Innenwandung über die Innenwandung hervorsteht. In einer weiter bevorzugten Ausgestaltung ist der Nocken in Haupterstreckungsrichtung der scharnierseitigen Stirnwand in einem Endbereich der Stirnwand angeordnet. Bei einer um senkrechte Drehachsen schwenkbaren Laderaumtür ist dabei eine Anordnung von Nocken am unteren und/oder oberen randseitigen Ende der Laderaumtür möglich. In vorteilhafter Weise wird auch bei einer entsprechenden, nur über eine Teillänge des Randbereiches erfolgenden Anordnung des Nockens eine eindeutige Schwenkbewegung der Laderaumtür vorgegeben, bei zugleich verringertem Materialbedarf und Bewegungswiderstand bei der Verschließbewegung. Weiterhin kann dabei die Anlagefläche des Kastenaufbaues in dem scharnierseitigen Randbereich der Türöffnung und/oder an einem oder beiden der zu diesem Randbereich senkrecht verlaufenden Randbereiche der Türöffnung vorgesehen sein. In einer vorteilhaften Ausgestaltung ist die Dichtwandung in Verschlußposition der Laderaumtür mit der Innenfläche des Nockens in einer gemeinsamen Ebene angeordnet, so daß auch die Gegenwandung und die Anlagefläche am Kastenaufbau in einer Ebene liegen und sogar ineinander übergehen können. Weiterhin besteht die Möglichkeit, daß die Randfläche als Dichtwandung ausgebildet ist. Dazu besteht die Möglichkeit, daß die Randfläche in ihrer Formgebung speziell an die Form der Gegenwandung des Kastenaufbaues angepaßt ist und/oder daß eine spezielle Oberfläche vorgesehen ist, bspw. mit einer bevorzugten Glätte oder Beschichtung. In einer zweckmäßigen Ausführungsform ist der Nocken als ein Strangprofil, insbesondere als Strangpreßprofil ausgebildet. Er kann außerdem formund/oder kraftschlüssig mit einem Randprofil der Laderaumtür oder mit der Laderaumtür selbst verbunden sein. Eine derartige Ausführung ermöglicht eine preiswerte Herstellung, eine einfache Montage und einen sicheren Halt des Nockens an der Laderaumtür. Der Nocken kann aus einem Kunststoff, aber auch aus einem anderen zweckmäßigen Material hergestellt sein.

In einer weiter bevorzugten Ausgestaltung der Laderaumtür ist vorgesehen, daß das Scharnierglied den Außenrand der Laderaumtür mit einer der beiden Drehachsen durchsetzt, wobei darauf abgestellt ist, daß der Achskörper und daß die Innenfläche in einem die Verschlußposition einschließenden Drehwinkelbereich der Laderaumtür in Projektion auf die von den Drehachsen bestimmte Ebene zumindest bereichsweise zwischen den Drehachsen angeordnet ist.

Anspruch 11 betrifft eine Ausführung, bei der in Richtung der türseitigen Drehachse ein drehsteif mit dem Scharnierglied verbundener Achskörper angeordnet ist, welcher in einem Querschnitt unrund ausgebildet ist, wozu im einzelnen auch auf die EP-A2 0 698 515 verwiesen wird. Der Achskörper liegt an einem türseitig befestigten Federelement an, welches durch den Achskörper eine von dem Drehwinkel zwischen dem Achskörper und der Laderaumtür abhängige Verformung erfährt. Eine derartige Anordnung bewirkt bei einem Verschwenken der Laderaumtür bezüglich der beiden Drehachsen des Scharniers eine bevorzugte Reihenfolge bzw. Ausprägung der jeweiligen Drehwinkel des Scharnierglieds relativ zu der Laderaumtür bzw. zu dem Kastenaufbau. Die drehwinkelabhängige Verformung des Federelements bewirkt ein ebenfalls von dem Drehwinkel abhängiges, zwischen der Laderaumtür und dem Scharnierglied wirksames Rückstellmoment, in dessen Wirkrichtung eine federnde Rückstellbewegung erfolgt. Bevorzugt ist vorgesehen, daß das Scharnierglied mit der türseitigen Drehachse den Außenrand der Laderaumtür durchsetzt und daß das Federelement als Flachfeder ausgebildet ist, welche mit einer Flachseite an dem Achskörper anliegt. Insbesondere ist daran gedacht, daß das Federelement innerhalb der Laderaumtür an zwei Enden des Federelementes befestigt ist. Bevorzugt erstreckt sich die Längsachse des Achskörpers in einer zu der Längsachse des Federelementes im wesentlichen senkrechten Richtung, und der unrunde Querschnitt des Achskörpers bewirkt bei seiner Verdrehung relativ zu der Laderaumtür eine drehwinkelabhängige Durchbiegung des Federelementes. In einer vorteilhaften Ausgestaltung ist vorgesehen, daß der unrunde Querschnitt des Achskörpers so zu dem Scharnierglied bzw. zu der Längsrichtung der Flachfeder ausgerichtet ist, daß er in Verschlußposition der Laderaumtür eine minimale Verformung des Federelementes bewirkt und/oder daß er in einer Öffnungsposition der Laderaumtür eine maximale Verformung des Federelementes bewirkt. Auch eine zugekehrte Zuordnung ist jedoch in Betracht zu ziehen. In diesem Zusammenhang ist besonders an eine Formgebung des unrunden Querschnittsprofiles gedacht, bei der eine minimale und/oder maximale Verformung des Federelementes in einem jeweiligen Totpunkt kein Rückstellmoment zwischen Laderaumtür und dem Scharnierglied bewirkt. Für die Erfindung ist wesentlich, daß das von dem Drehwinkel zwischen dem Scharnierglied und der Laderaumtür abhängige Drehmoment bei einer Verschwenkbewegung der Laderaumtür bezüglich der beiden Drehachsen des Scharniers zu einer bevorzugten Verdrehreihenfolge des Scharnierglieds führt und dadurch eine Bewegungsform der Laderaumtür ermöglicht, durch die beim Erreichen der Verschließposition eine-Annäherung bzw. ein Kontakt der Dichtwandung mit der Gegenwandung in einer im wesentlichen flächennormalen Bewegungsrichtung erfolgt. Insbesondere ist daran gedacht, daß, ausgehend von einer Öffnungsstellung der Laderaumtür, bei einer Schließbewegung zunächst eine ausschließliche oder überwiegende Drehung des Scharniergliedes um seine laderaumseitige bzw. kastenaufbauseitige Drehachse erfolgt und daß bei Überschreiten eines bestimmten Verschwenkwinkels eine zusätzliche oder ausschließliche Drehung des Scharnierglieds um seine türseitige Drehachse erfolgt. Es kann dazu beispielsweise vorgesehen sein, daß das Federelement in der Öffnungsstellung eine minimale oder maximale, d.h. in beiden Fällen eine den Drehwinkel gegenüber dem Scharnierglied in einem Totpunkt stabilisierende Verformung erfährt und daß das Scharnierglied nach einem bestimmten Drehwinkel um die laderaumseitige Drehachse gegen einen kastenaufbauseitigen Anschlag stößt, so daß bei einer weiteren Verschließbewegung eine ausschließliche oder zumindest anteilige Drehung des Scharnierglieds um die türseitige Drehachse gegen den Bewegungswiderstand durch das Federelement erfolgt. Der kastenaufbauseitige Anschlag kann dabei, wie oben erläutert, in einer Anlagefläche bestehen zur Anlage eines an einer randseitigen Stirnwand der Laderaumtür befestigten Nockens. Entsprechend erfolgt bei einer bevorzugten Ausführungsform der Laderaumtür, ausgehend von einer Öffnungsposition, zunächst eine ausschließliche oder überwiegende Drehung des Scharnierglieds um die laderaumseitige Drehachse, bis der zuvor beschriebene Nocken im Randbereich der Laderaumtür in Anlage zu einer Anlagefläche des Kastenaufbaus tritt und dadurch bei einer weiteren Verschließbewegung eine zusätzliche oder ausschließliche Drehung des Scharnierglieds um die türseitige Drehachse bewirkt. Alternativ kann ein Anschlag auch durch eine Ausnehmung in einer kastenaufbauseitigen Wandung oder in einer der Laderaumtür benachbarten zweiten Laderaumtür gebildet sein, durch welche das Scharnierglied mit dem zweiten, vorzugsweise nicht von einer Feder beaufschlagten Achskörper tritt. Es wird dabei jeweils unter beliebiger Kombination der jeweils in Verbindung mit dem Nocken und mit dem Federelement beschriebenen Merkmale eine geführte Schließbewegung der Laderaumtür ermöglicht, bei welcher beim Erreichen der Verschließposition eine Annäherung bzw. Kontakt der Dichtwandung mit der Gegenwandung in einer im wesentlichen flächennormalen Richtung erfolgt und bei der weiterhin ein Verklemmen bzw. Blockieren des Scharniers infolge einer ungünstigen Verdrehreihenfolge um beide Drehachsen vermieden wird. Die Gegenwandung für die Dichtwandung kann dabei einerseits an fest mit dem Lastkraftwagen verbundenen Teilen des Kastenaufbaues vorgesehen sein, andererseits kann sie jedoch auch, bzw. zusätzlich, an der Laderaumtür benachbarten, beweglichen Elementen des Kastenaufbaus, wie etwa weiteren Laderaumtüren oder -segmenten ausgebildet sein. In vorteilhafter Weise besteht die Möglichkeit, die Größe des drehwinkelabhängigen Drehmomentes zwischen dem Scharnierglied und der Laderaumtür durch die Anzahl der Federelemente an einem Achskörper und/oder durch zweckmäßige Dimensionierung der Federelemente zu beeinflussen. Soweit zur Verwendung Flachfedern vorgeschlagen sind, ist insbesondere an eine Dicke zwischen 0,2 und 2 mm, bevorzugt zwischen 0,8 und 1 mm, gedacht. In Weiterbildung bzw. Abwandlung der bisher erläuterten Anordnung besteht auch die Möglichkeit, anstelle der türseitigen Drehachse oder in Kombination zu dieser auch den laderaumseitigen Achskörper des Scharnierglieds unrund auszubilden und mit Federelementen, vorzugsweise unterschiedlicher Vorspannungen bzw. Federkennlinien zu beaufschlagen.

Nachfolgend wird die Erfindung anhand der beigefügten Zeichnungen, welche bevorzugte Ausführungsformen, beispielhaft darstellen, näher erläutert. Dabei zeigt:
- Fig. 1: in Draufsicht zwei benachbarte Laderaumtüren nach der Erfindung,
- Fig. 2: einen Teilschnitt gemäß der Linie II-II in Fig. 1, wobei die Teilfiguren 2a bis 2e verschiedene Öffnungspositionen der Laderaumtür betreffen und wobei Fig. 2f eine Ausschnittsvergrößerung zu Figur 2a wiedergibt,
- Fig. 3: einen Teilschnitt gemäß der Linie III-III in Fig. 1, wobei die Unterfiguren 3a bis 3e verschiedene Öffnungspositionen der Laderaumtür betreffen und die Unterfigur 3f eine Ausschnittsvergrößerung zu Fig. 3a wiedergibt,
- Fig. 4: einen Teilschnitt durch eine abweichende, zweiflügelige Laderaumtür nach der Erfindung, wobei die Unterfiguren 4a bis 4f verschiedene Öffnungspositionen eines Türflügels betreffen.

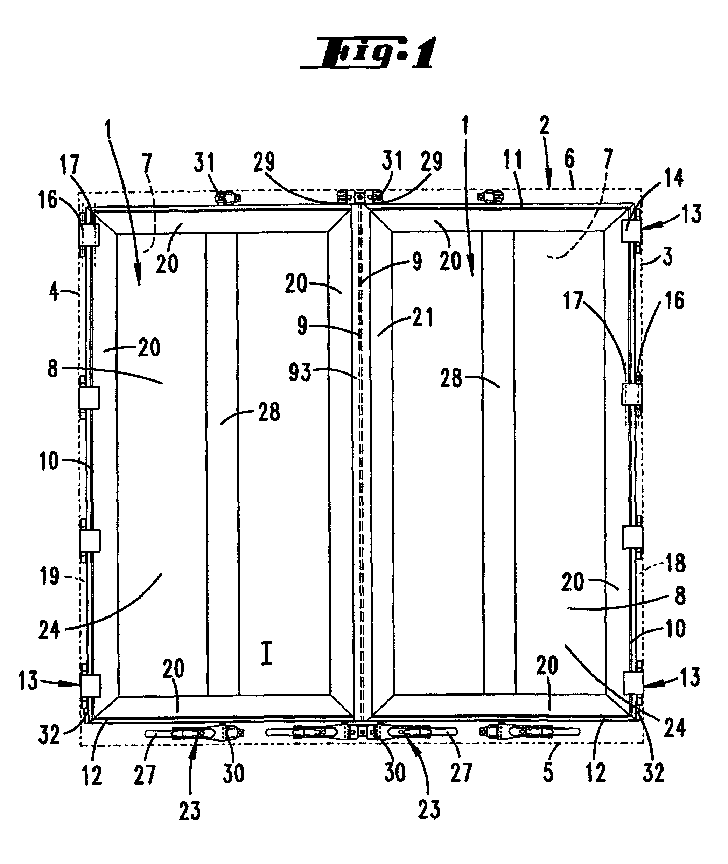

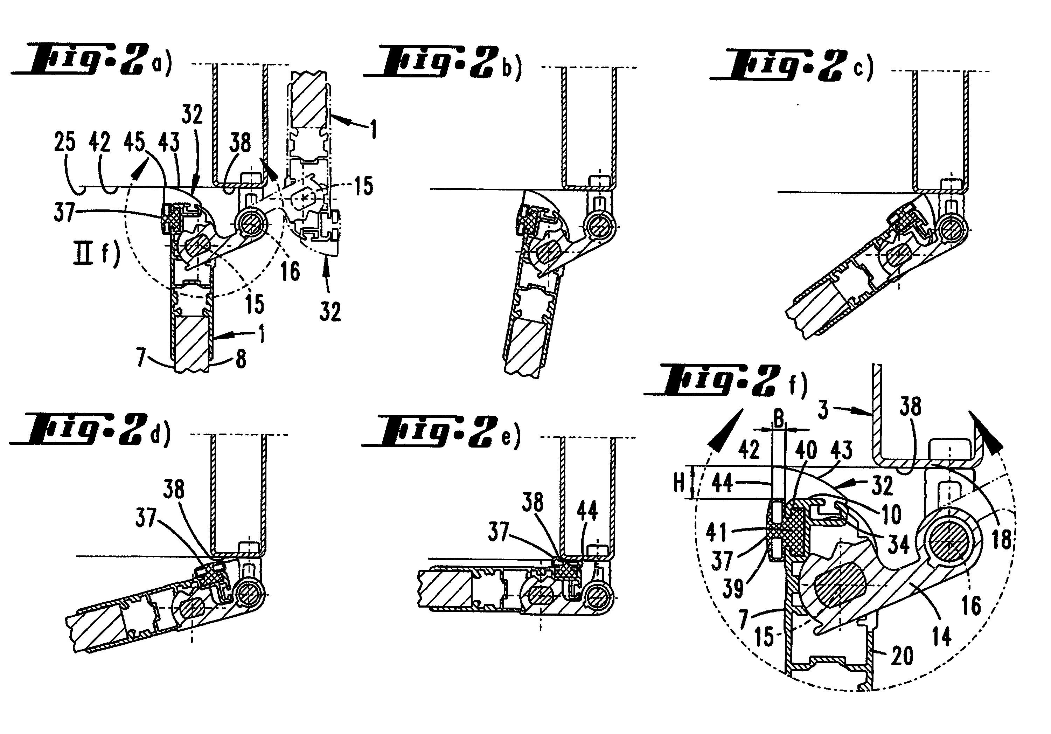

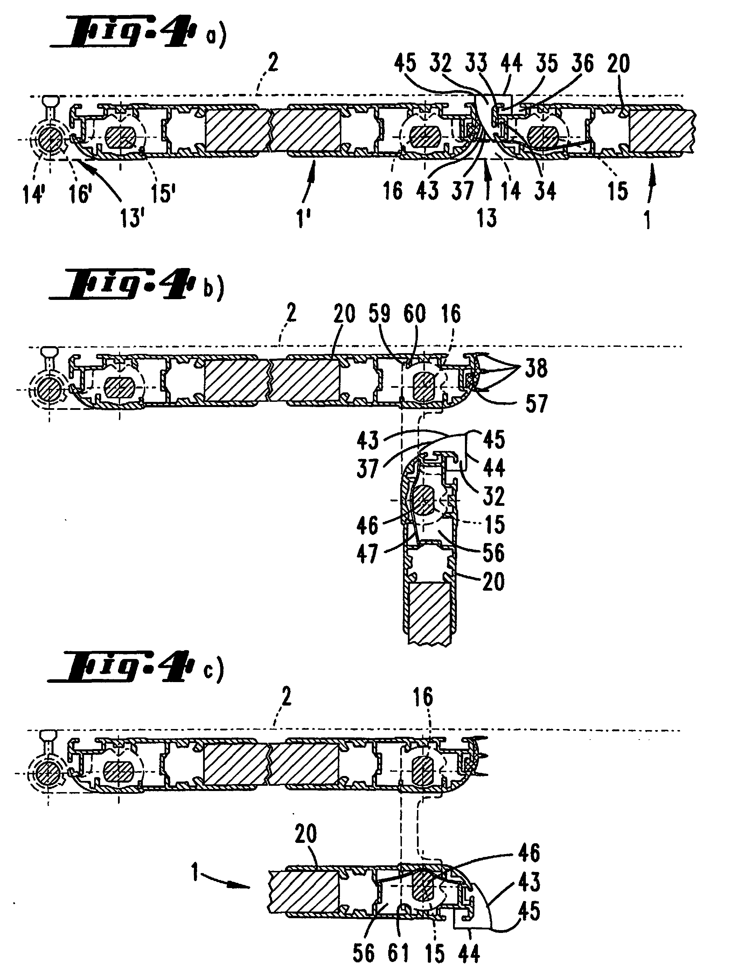

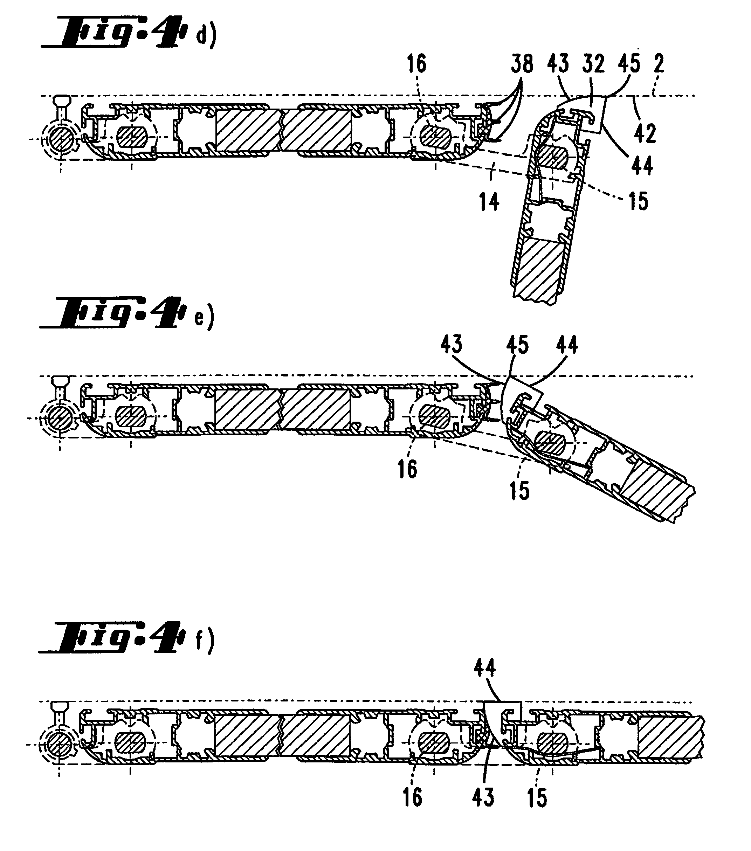

In Fig. 1 sind in Draufsicht zwei Laderaumtüren 1 eines Kastenaufbaus 2 eines nicht näher dargestellten LKW's gezeigt. Der Kastenaufbau 2 besitzt Seitenwände 3, 4, einen Boden 5 und ein Dach 6. Jede Laderaumtür weist eine Innenwand 7 auf, welche in Verschließposition dem Inneren des Laderaumes zugewandt ist, weiterhin eine Außenwand 8 sowie jeweils vier Stirnwände 9, 10, 11, 12, deren Querabmessung der Dicke der Laderaumtüren 1 entspricht. Jede Laderaumtür ist mit jeweils vier Scharnieren 13 an den Seitenwänden 3, 4 angeschlagen. Die Scharniere 13 weisen jeweils ein Scharnierglied 14 auf, welches um zwei Achsen 15, 16 drehbar gelagert ist. Die laderaumseitige bzw. kastenaufbauseitige Achse 16 ist jeweils vor einer entsprechenden Stirnseite 18, 19 der jeweiligen Seitenwand 3, 4 gelagert. Die türseitige Achse 17 ist jeweils innerhalb der entsprechenden Laderaumtür 1 gelagert. Die Laderaumtüren 1 weisen randseitig Profile 20, 21 auf, wobei sich das Profil 21 durch eine zusätzliche Überstandskante 93 von den Profilen 20 unterscheidet. Zur Befestigung der Profile 20, 21 an den Türblättern 24 der Laderaumtüren 1 wird im einzelnen auf die EP-A2 0 698 515 verwiesen. Zur Verrieglung der Laderaumtüren 1 dienen Verrieglungsvorrichtungen 23, vgl. insbesondere auch Fig. 10, mit denen die jeweils unteren Profile 20 an der Stirnseite 25 des Bodens 5 bzw. die oberen Profile 20 an der Stirnseite 26 des Daches 6 festgelegt werden können. Um jede Verriegelungsvorrichtung 23 mit nur einer Handhabe 27 zu betätigen, ist in den Laderaumtüren eine jeweils zugeordnete Übertragungsstange 29 mit oberen Fortsätzen 31 angeordnet. Die beiden dargestellten Laderaumtüren 1 unterscheiden sich lediglich durch die einander zugewandten randseitigen Profile 20, 21, bzw. durch eine zusätzliche Überstandskante des Profils 21, und sind im übrigen spiegelsymmetrisch zueinander angeordnet. Von daher sind bisher und im weiteren auch gleiche Bauteile mit gleichen Positionsziffern bezeichnet. Die Fig. 2a bis 2f zeigen einen Schnitt gemäß der Linie II-II in Fig. 1, wobei die Unterfiguren 2a bis 2e verschiedene Öffnungsstellungen der Laderaumtür 1 beschreiben und die Unterfigur 2f eine Ausschnittsvergrößerung zu Fig. 2a wiedergibt. In weiterer Einzelheit ist ein Nocken 32 dargestellt, welcher als Strangprofil ausgebildet ist und mit einem ersten T-förmigen Fortsatz 33 in einer ersten Hohlnut 34 und der mit einem in Fig. 4 dargestellten L-förmigen zweiten Fortsatz 35 in einer zweiten Hohlnut 36 des scharnierseitigen Profils 20 gehalten ist. Wie dazu in Verbindung mit Fig. 1 deutlich wird, erstreckt sich der Nocken 32 an jeder der Laderaumtüren 1 nur in einem Längenabschnitt unterhalb des jeweils untersten Scharniers 13. Wie weiter aus den Fig. 2 ersichtlich, weist die Innenwand 7 der Laderaumtür 1 eine Dichtwandung 37 zur dichtenden Zusammenwirkung mit einer Gegenwandung 38 auf, welche an der Stirnseite 18 der Seitenwand 3 ausgebildet ist. Im dargestellten Ausführungsbeispiel handelt es sich bei der Dichtwandung 37 um eine Oberfläche einer Gummidichtung 39, welche an der Innenwand 7 in einer Nut 40 mittels eine T-förmigen Fortsatzes 41 formschlüssig befestigt ist. Der an der scharnierseitigen Stirnwand 9 befestigte Nocken 32 ist für eine Anlage an einer Anlagefläche 42 des Kastenaufbaus 2 bestimmt, welche im gezeigten Ausführungsbeispiel an der Stirnseite 25 des Bodens 5 des Kastenaufbaus 2 vorgesehen ist. Der Nocken 32 weist eine Randfläche 43 auf, mit welcher er in einer zu der scharnierseitigen Stirnwand 10 senkrechten Richtung über die scharnierseitige Stirnwand 10 übersteht. Der überstand der Randfläche ist in Fig. 2f mit dem Bezugszeichen H gekennzeichnet. Der Nocken 32 weist weiterhin eine dem Laderaum in Verschlußposition der Laderaumtür zugewandte Innenfläche 44 auf, welche in einer Randkante 45 in die Randfläche 43 übergeht. Es wird deutlich, daß sich die Randfläche 43 ausgehend von der Randkante 45 unter zumindest teilweiser Überdeckung der scharnierseitigen Stirnwand 10 erstreckt. Die Innenfläche 44 steht senkrecht zu der Innenwandung 7 der Laderaumtür 1 über die Innenwandung 7 hervor. Der zugeordnete Überstand ist in Fig. 2f mit dem Bezugszeichen B gekennzeichnet.

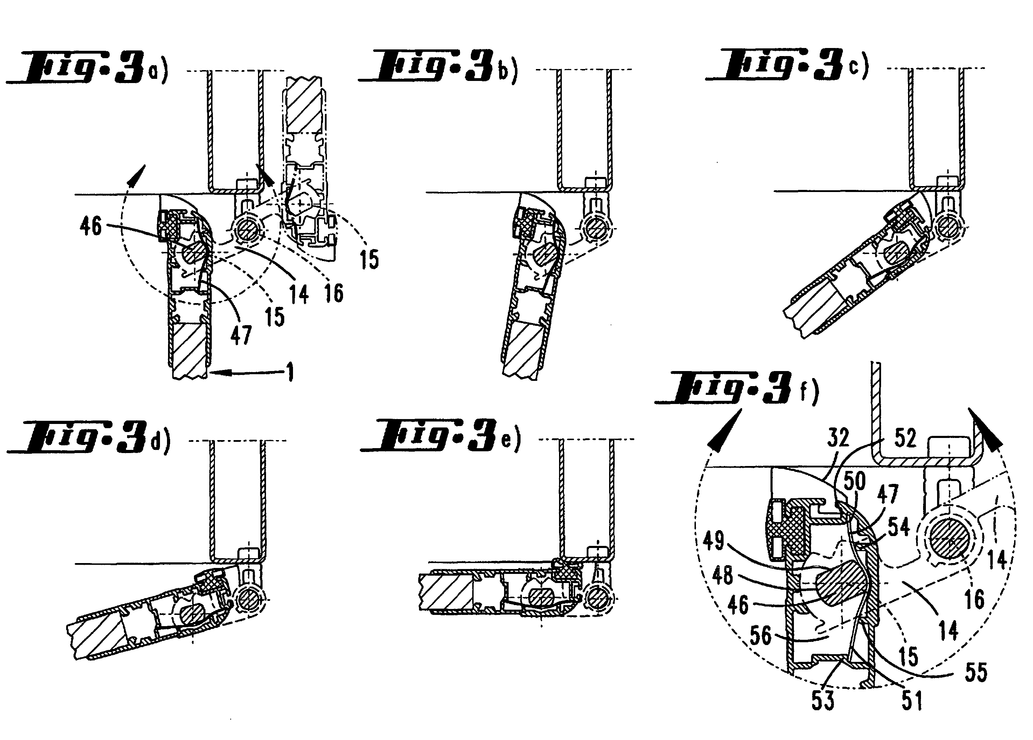

Von Fig. 2a bis zu Fig. 2e sind mit aufsteigender Buchstabenfolge verschiedene Positionen der Laderaumtür 1 während eines Schließvorganges dargestellt. In Fig. 2a ist zunächst mit gestrichelten Linien eine Öffnungsposition der Laderaumtür beschrieben, in welcher die Laderaumtür 1 gegenüber ihrer Verschließposition um 270° abgewinkelt ist und im wesentlichen parallel zu der Seitenwand 3 ausgerichtet ist. In Fig. 2a ist mit durchgezogenen Linien eine demgegenüber um 180° in Richtung auf die Schließposition verdrehte Ausrichtung der Laderaumtür 1 dargestellt. Es ist deutlich erkennbar, daß bis zum Erreichen dieser Schwenkposition eine ausschließliche Drehung des Scharniers um die laderaumseitige Drehachse 16 stattgefunden hat. Zur näheren Erläuterung der dafür verantwortlichen Zusammenhänge wird auf die nachfolgende Beschreibung zu der Fig. 3 verwiesen. In der in Fig. 2a mit durchgezogenen Linien dargestellten Schwenkposition der Laderaumtür 1 ist diese im wesentlichen senkrecht zu der Verschließposition ausgerichtet, und der Nocken 32 tritt mit seiner Randfläche 43 im Bereich der Randkante 45 in Kontakt zu der Anlagefläche 42 des Kastenaufbaus 2. Durch diese Anlage entsteht eine gelenkige und seitenverschiebliche Abstützung der Laderaumtür 1 gegenüber dem Kastenaufbau 2, welche in Verbindung mit den Drehachsen 15, 16 ein bewegliches Dreigelenk bildet. Wie sich aus den weiteren Figuren 2b bis 2e ergibt, bleibt die Anlage des Nockens 32 zumindest bei einem leichten Druck der Laderaumtür 1 gegen den Kastenaufbau 2 während der weiteren Schließbewegung bis zum Erreichen der Verschließposition der Laderaumtür 1 erhalten. Die Anlage führt dabei in Verbindung mit den Drehachsen 15, 16 zu einer eindeutigen Kinematik während der weiteren Schließbewegung der Laderaumtür 1. Es wird deutlich, daß dabei auch eine Verdrehung des Scharniergliedes 14 um die türseitige Drehachse 15 erfolgt. Wie sich aus Fig. 2e ergibt, ist die Dichtwandung 37 in Verschlußposition der Laderaumtür 1 mit der Innenfläche 44 des Nockens 32 in einer gemeinsamen Ebene angeordnet. Wesentlich an der dargestellten Anordnung ist, daß der Nocken 32 eine derartige Führung der Verschwenkbewegung der Laderaumtür 1 bewirkt, daß beim Erreichen der Verschließposition eine Annäherung bzw. ein Kontakt zwischen der Dichtwandung 37 und der Gegenwandung 38 in einer im wesentlichen zu diesen Wandungen senkrechten Bewegungsrichtung erfolgt. Daraus resultiert, daß praktisch keine seitliche, d.h. tangential zu der Dichtwandung 37 und der Gegenwandung 38 gerichtete Kraftübertragung erfolgt und ein seitliches Abgleiten praktisch vermieden wird. Es wird dadurch beispielsweise verhindert, daß etwa auf den vorgenannten Wandungen 37, 38 in einer Öffnungsstellung anhaftende Festkörper, beispielsweise Schmutz, Sand oder Staub, bei einem Verschließen der Laderaumtür 1 zu einem Verkratzen der dichtend zusammenwirkenden Wandungen 37, 38 führen, so daß die Lebensdauer der Wandungen auch im Hinblick auf ihre Dichtwirkung entscheidend verlängert wird. Aufgrund der vorgenannten Funktionsweise übernimmt der Nocken 32 bei einer Verschließbewegung insofern die Funktion eines "Dichtungseinweisers".

Fig. 3 beschreibt in den Unterfiguren 3a bis 3e einen Teilschnitt gemäß der Linie III-III in Fig. 1, während Fig. 3f eine Ausschnittsvergrößerung zu Fig. 3a wiedergibt. Im übrigen beziehen sich die Fig. 3a bis 3e auf die mit jeweils entsprechenden Kleinbuchstaben indizierten Unterfiguren 2, bzw. auf die darin dargestellten Verschwenkpositionen der Laderaumtür 1. In weiterer Einzelheit ist dargestellt, daß in Richtung der türseitigen Drehachse 15 ein drehsteif mit dem Scharnierglied 14 verbundener Achskörper 46 angeordnet ist, welcher in einem Querschnitt unrund ausgebildet ist und welcher an einem türseitig befestigten Federelement 47 anliegt. Im gezeigten Ausführungsbeispiel weist der Achskörper 46 einen im wesentlichen rechteckigen Querschnitt mit abgerundeten Schmalseiten auf, welche in kleineren Radien in die Längsseiten übergehen. Das Federelement 47 ist dabei als Flachfeder ausgebildet, welche mit einer Flachseite, die sich in einer senkrecht zur Zeichenebene ausgerichteten Ebene erstreckt, an dem Achskörper 46 anliegt. In weiterer Einzelheit ist das Federelement 47 innerhalb der Laderaumtür 1 an zwei Enden 50, 51 befestigt. Dies ist durch eine Einspannung des Federelementes 47 zwischen jeweils einem Materialvorsprung 52, 53 und einem Gehäusesteg 54, 55 in einem randseitigen Innenraum 56 des scharnierseitigen Profils 20 realisiert. Hinsichtlich einer drehbaren Lagerung des Achskörpers 46 im Inneren des scharnierseitigen Profils 20 wird auf die EP-A2 0 698 515 verwiesen. Aus den Fig. 3a bis 3e ist deutlich zu ersehen, daß eine Drehung des Scharnierglieds 14 um die türseitige Drehachse 15 eine von dem relativen Drehwinkel zwischen Scharnierglied 14 und Laderaumtür 1 abhängige Verformung bzw. etwa mittige Durchbiegung des Federelements 47 bewirkt. Aus Fig. 3 geht mit Bezug auf die gestrichelt dargestellte Schwenkposition weiterhin hervor, daß durch den Andruck des Federelements 47 gegen den im Querschnitt unrunden Achskörper 46 eine Drehung des Scharnierglieds 14 um die türseitige Drehachse 15 gegenüber einer Drehung des Scharnierglieds 14 um die kastenaufbau seitige Drehachse 16 erschwert wird. Infolge dessen wird ein Verschwenken der Laderaumtür 1, ausgehend von der gestrichelt dargestellten Position, wie oben erläutert, zunächst zu einem ausschließlichen, zumindest aber zu einem überwiegenden Verdrehen des Scharnierglieds 14 um die laderaumseitige Drehachse 14 führen, bis der Nocken 32 in Anlage zu der Anlagefläche 42 des Kastenaufbaues 2 tritt und in der ebenfalls zuvor erläuterten Weise eine eindeutige Führung der Laderaumtür bei einer weiteren Schließbewegung ermöglicht. Diese weitere Bewegung ist in den Unterfiguren 3b bis 3e in verschiedenen Verschwenkpositionen der Laderaumtür 1 dargestellt. Es wird deutlich, daß mit einer zunehmenden Annäherung an die Verschließposition auch eine Verdrehung des Scharnierglieds um die türseitige Drehachse 15 erfolgt, was infolge des unrunden Querschnitts des Achskörpers 46 zu einer abnehmenden Durchbiegung des Federelements 47 führt. In Fig. 3e ist die Verschließposition der Laderaumtür 1 am Kastenaufbau 2 erreicht, und zugleich ist eine minimale Durchbiegung des Federelements 47 durch den daran anliegenden Achskörper 36 gegeben. Insofern befindet sich der Achskörper 46 bezüglich seines Querschnittes in einem Totpunkt zu dem auch weiterhin anliegenden Federelement 47. Abweichend von der in Fig. 3 dargestellten Ausrichtung des unrunden Querschnitts des Achskörpers 46, bei welcher die Längsseiten 49 des Querschnitts im wesentlichen parallel zu einer Verbindungslinie zwischen den Drehachsen 15, 16 verlaufen, sind auch andere Ausrichtungen in bezug auf diese Verbindungslinie denkbar, insbesondere eine um 90° in der Zeichenebene gedrehte Ausrichtung, bei welcher die Längsseiten 49 des unrunden Querschnitts in der in Zeichenebene liegenden Schnittebene rechtwinklig zu der Verbindungsachse zwischen den Drehachsen 15, 16 verlaufen. Weiterhin ist bei einer drehsteifen Verbindung des Achskörpers 46 mit dem Scharnierglied 14 eine Ausrichtung des unrunden Querschnittes vorstellbar, bei welcher in einer von Fig. 3a gezeigten Öffnungsstellung der Laderaumtür eines um 270° eine minimale Durchbiegung des Federelements 47 von dem Achskörper 46 hervorgerufen wird, so daß eine quasi stabile Gleichgewichtslage der Laderaumtür in der Öffnungsstellung erreicht wird.

Fig. 4 zeigt einen Teilschnitt durch eine Laderaumtür 1, welche mit einem Scharnier 13, das Scharnierglieder 14 aufweist, an einer weiteren Laderaumtür 1' gelenkig angebunden ist. Die Laderaumtür 1' ist mit einem Scharnierglieder 14' aufweisenden Scharnier 13' an einem nicht näher dargestellten Kastenaufbau eines Lastkraftwagens angelenkt. In der in Fig. 4a dargestellten Verschlußposition der Laderaumtüren 1, 1' liegen ihre Haupterstreckungsrichtungen in einer gemeinsamen, zu der Außenkontur des Kastenaufbaus 2 parallelen Ausrichtung. Eine derartige Anordnung von gelenkig miteinander verbundenen Laderaumtüren 1, 1' wird auch als eine aus mehreren Türflügeln gebildete Laderaumtür bezeichnet. Im dargestellten Ausführungsbeispiel weist die Laderaumtür 1 an dem der Laderaumtür 1' zugewandten Rand ein Profil 20 auf, an welchem ein Nocken 32 befestigt ist, wobei hinsichtlich der den Querschnitt betreffenden Ausgestaltung des Nockens und seiner Befestigung an dem Profil 20 auf die Erläuterungen im Zusammenhang mit den Figuren 1 bis 3 verwiesen wird. Im Gegensatz zu den Figuren 1 bis 3 ist in Fig. 4 vorgesehen, daß die Randfläche 43 des Nockens 32 zugleich als Dichtwandung 37 zur dichtenden Zusammenwirkung mit einer Gegenwandung 38 des Kastenaufbaus 2 ausgebildet ist bzw. dient. Fig. 4a beschreibt die Verschließposition der Laderaumtüren 1, 1', in welcher die Randfläche 43 dichtend mit der Gegenwandung 38 zusammenwirkt. Die folgenden Figuren 4b und 4c verdeutlichen zwei unterschiedliche Schwenkpositionen der Laderaumtür 1 gegenüber der Laderaumtür 1', und die Figuren 4d bis 4f illustrieren verschiedene Schwenkpositionen der Laderaumtür 1 während einer nachfolgenden Schließbewegung. Wie sich beispielsweise aus Fig. 4b ergibt, ist die Gegenwandung 38 an einer Dichtung 57 ausgebildet, welche sich in Längsrichtung einer Stirnwand 58 eines randseitigen Profils 20 der Laderaumtür 1' erstreckt. Im Hinblick auf die verwendete Formulierung wird die Laderaumtür 1' mit der darin ausgebildeten Gegenwandung 38 bezüglich der Laderaumtür 1 als dem Kastenaufbau 2 zugehörig betrachtet. Da gemäß Fig. 4 somit keine weitere Abdichtung des scharnierseitigen Randes der Laderaumtür 1 gegenüber dem Kastenaufbau 2 vorgesehen ist, erstreckt sich der Nocken 32 im Gegensatz zu dem in den Figuren 1 bis 3 dargestellten Ausführungsbeispiel in Fig. 4 über die gesamte Längsrichtung des randseitigen Profils 20 der Laderaumtür 1, so daß auch hier eine vollständige Abdichtung verwirklicht wird. Allerdings besteht vorteilhaft die Möglichkeit, einen Nocken 32 dafür zu verwenden, der in seinem Querschnitt dem in Verbindung mit den Figuren 1 bis 3 beschriebenen Nocken entspricht und dabei eine größere Gesamtlänge aufweist. In weiterer Einzelheit zeigen die Figuren 4a bis 4f ein als Flachfeder ausgebildetes Federelement 47, welches in der zuvorbeschriebenen Weise in einem Innenraum 56 des scharnierseitigen Profils 20 der Laderaumtür 1 eingespannt ist und das an einem im Querschnitt unrunden Achskörper 46 anliegt, welcher sich in Richtung der Drehachse 15 erstreckt. Ausgehend von Fig. 4a bewirkt der unrunde Querschnitt zunächst eine ausschließliche Drehung des Scharnierglieds 14 um die Drehachse 16, bis gemäß Fig. 4b eine weitere Drehung um die Drehachse 16 durch eine Anlage des scharniergliedseitigen Anschlags 59 gegen einen Steg 60 im Innenraum des entsprechenden Profils 20 der Laderaumtür 1' verhindert wird. Bei einer weiteren Drehung der Laderaumtür 1 bis zu der in Fig. 4c beschriebenen Schwenkposition erfolgt eine ausschließliche Drehung um die Drehachse 15, bis auch diese durch Kontakt eines Anschlags 61 gegen einen Steg 62 im Innenraum 56 des scharnierseitigen Profils 20 der Laderaumtür beendet wird. Während des letzten Drehabschnittes von Fig. 4b zu Fig. 4c wird das Federelement 47 durch die Drehung des im Querschnitt undrunden Achskörpers 46 durchgebogen, so daß gegenüber der Drehachse 16 um die Drehachse 15 ein vergrößerter Drehwiderstand erreicht wird. Dieser erhöhte Drehwiderstand führt bei einer nachfolgenden Schließbewegung der Laderaumtür 1, wie diese in Fig. 4d beschrieben wird, zu einer ausschließlichen, zumindest überwiegenden Drehung des Scharnierglieds um die Drehachse 16, bis in der in Fig. 4d erreichten Ausrichtung der Laderaumtür 1 der Nocken 32 in Anlage zu seiner Anlagefläche 42 des Kastenaufbaus 2 tritt. Bei einer weiteren, in den Figuren 4e und 4f erläuterten Schließbewegung wirkt die Anlage des Nokkens 32 gemeinsam mit den Drehachsen 15, 16 als bewegliches Dreigelenk, durch welches eine eindeutige Kinematik der weiteren Schwenkbewegung vorgegeben ist. Die Anlage 42 ist dabei ohne nähere zeichnerische Darstellung an den an die Türöffnung angrenzenden Außenwandflächen des Kastenaufbaues oberhalb und unterhalb der Türöffnung vorgesehen. Wesentlich ist, daß beim Erreichen der Verschließposition eine Annäherung, bzw. ein Kontakt zwischen der als Dichtwandung 37 wirksamen Randfläche 43 und der Gegenwandung 38 praktisch senkrecht zu den jeweiligen Flächennormalen in den Berührbereichen erfolgt, so daß eine verschleißmindernde, materialschonende Anlage ermöglicht ist. In der in Fig. 4f dargestellten Verschließposition liegt darüber hinaus die Innenfläche 44 stabilisierend an den ober- und unterhalb der Türöffnung vorgesehenen Anlageflächen 42 an.

## Patentansprüche

1. Laderaumtür (1) mit einer dem Laderaum in Verschlussposition zugewandten Innenwand (7), mit einer Außenwand (8) und mit Stirnwänden (9,10,11,12), wobei an dem Außenrand der Laderaumtür (1) ein Scharnier (13) mit einem um zwei Drehachsen drehbaren Scharnierglied (14) angeordnet ist und die Laderaumtür (1) eine Dichtwandung (37) zur dichtenden Zusammenwirkung mit einer Gegenwandung aufweist, **dadurch gekennzeichnet, dass** an der scharnierseitigen Stirnwand (10) ein Nocken (32) für eine Anlage an einer Anlagefläche (42) des Kastenaufbaus (2) ausgebildet ist, welcher mit einer Randfläche (43) in einer zu der scharnierseitigen Stirnwand (10) senkrechten Richtung über die scharnierseitige Stirnwand (10) übersteht.

2. Laderaumrür nach Anspruch 1, **dadurch gekennzeichnet, dass** der Nocken (32) eine dem Laderaum (2) in Verschlussposition zugewandte Innenfläche (44) aufweist, welche in einer Randkante (45) in die Randfläche (43) übergeht, und dass sich die Randfläche (43) ausgehend von der Randkante (45) unter zumindest teilweiser Überdeckung der scharnierseitigen Stirnwand (10) erstreckt.

3. Laderaumtür nach Anspruch 2, **dadurch gekennzeichnet, dass** die Innenfläche (44) senkrecht zu der Innenwand (7) über die Innenwand (7) hervorsteht.

4. Laderaumtür nach einem der vorhergehenden Ansprüche, **dadurch gekennzeichnet, dass** der Nocken (32) in Haupterstreckung der scharnierseitigen Stirnwand (10) in einem Endbereich dieser Stirnwand (10) angeordnet ist.

5. Laderaumtür nach einem der Ansprüche 2 bis 4, **dadurch gekennzeichnet, dass** die Dichtwandung (37) in Verschlussposition mit der Innenfläche (44) des Nockens (32) in einer gemeinsamen Ebene angeordnet ist.

6. Laderaumtür nach einem der Ansprüche 1 bis 4, **dadurch gekennzeichnet, dass** die Randfläche (43) als Dichtwandung (37) ausgebildet ist.

7. Laderaumtür nach einem der vorhergehenden Ansprüche, **dadurch gekennzeichnet, dass** der Nocken (32) als Strangprofil ausgebildet ist.

8. Laderaumtür nach einem der vorhergehenden Ansprüche, **dadurch gekennzeichnet, dass** der Nocken (32) mit einem Randprofil (20) der Laderaumtür (1) verbunden ist.

9. Laderaumtür nach einem der vorhergehenden Ansprüche, **dadurch gekennzeichnet, dass** der Nocken (32) aus einem Kunststoff hergestellt ist.

10. Laderaumtür nach einem der Ansprüche 2 bis 9, **dadurch gekennzeichnet, dass** das Scharnierglied (14) den Außenrand der Laderaumtür (1) mit einer der beiden Drehachsen (15, 16) durchsetzt, und dass die Innenfläche (44) in einem die Verschlussposition einschließenden Drehwinkelbereich der Laderaumtür (1) in Projektion auf die von den Drehachsen (15,16) bestimmte Ebene zumindest bereichsweise zwischen den Drehachsen (15, 16) angeordnet ist.

11. Laderaumtür (1), nach einem der Ansprüche 1 bis 10 wobei bezüglich der türseitigen Drehachse ein drehsteif mit dem Schamierglied verbundener Achskörper angeordnet ist, welcher in einem Querschnitt unrund ausgebildet ist, **dadurch gekennzeichnet, dass** der Achskörper (46) an einem türseitig befestigten Federelement (47) anliegt, welches durch den Achskörper (46) eine von dem Drehwinkel zwischen dem Achskörper (46) und der Laderaumtür (1) abhängige Verformung erfährt.

12. Laderaumtür nach Anspruch 11, **dadurch gekennzeichnet, dass** das Scharnierglied (14) den Außenrand der Laderaumtür (1) durchsetzt und dass das Federelement (47) als Flachfeder ausgebildet ist, welche mit einer Flachseite an dem Achskörper (46) anliegt.

13. Laderaumtür nach einem der Ansprüche 11 oder 12, **dadurch gekennzeichnet, dass** das Federelement (47) innerhalb der Laderaumtür (1) an zwei Enden befestigt ist.

14. Laderaumtür nach einem der Ansprüche 11 bis 13, **dadurch gekennzeichnet, dass** der unrunde Querschnitt des Achskörpers (46) so zu dem Scharnierglied (14) ausgerichtet ist, dass er in Verschlussposition der Laderaumtür (1) eine minimale Verformung des Federelements (47) bewirkt und/oder dass er in einer Öffnungsposition der Laderaumtür (1) eine maximale Verformung des Federelements (47) bewirkt.

15. Laderaumtür nach einem der Ansprüche 11 bis 14, **dadurch gekennzeichnet, dass** bei einem von der Öffnungsposition ausgehenden Verschwenken der Laderaumtür (1) keine Verdrehung des Achskörpers (46) relativ zu der Laderaumtür (1) erfolgt, bis der Nocken (32) in eine Anlage zu dem Kastenaufbau (2) tritt.

## Claims

1. Container door (1) having an inner wall (7) which faces the interior of the container in a closed position, having an outer wall (8) and having end walls (9, 10, 11, 12), a hinge (13) having a hinge member (14) rotatable about two axes of rotation being disposed on the outer edge of the container door (1), and the container door (1) having a sealing wall portion (37) for sealing co-operation with a counter wall portion, **characterised in that** a cam (32) for engagement on an engagement surface (42) of the box structure (2) is provided on the end wall (10) which has the hinge, the cam (32) projecting with an edge surface (43) beyond the end wall (10) which has the hinge in a direction which is perpendicular to the end wall (10) which has the hinge.

2. Container door according to Claim 1, **characterised in that** the cam (32) has an inner surface (44) facing the interior (2) of the container in a closed position, the inner surface (44) merging into the edge surface (43) in a peripheral edge (45), and **in that** the edge surface (43) proceeding from the peripheral edge (45) extends with at least partial overlap of the end wall (10) which has the hinge.

3. Container door according to Claim 2, **characterised in that** the inner surface (44) projects beyond the inner wall (7) perpendicular to the inner wall (7).

4. Container door according to one of the preceding claims, **characterised in that** the cam (32) is disposed in a principal extent of the end wall (10) which has the hinge in an end region of this end wall (10).

5. Container door according to one of Claims 2 to 4, **characterised in that** the sealing wall portion (37) in a closed position is disposed in a common plane with the inner surface (44) of the cam (32).

6. Container door according to one of Claims 1 to 4, **characterised in that** the edge surface (43) is formed as sealing wall portion (37).

7. Container door according to one of the preceding claims, **characterised in that** the cam (32) is formed as an extruded profile.

8. Container door according to one of the preceding claims, **characterised in that** the cam (32) is connected with an edge profile (20) of the container door (1).

9. Container door according to one of the preceding claims, **characterised in that** the cam (32) is made of a plastics material.

10. Container door according to one of Claims 2 to 9, **characterised in that** the hinge member (14) passes through the outer edge of the container door (1) with one of the two axes of rotation (15, 16), and **in that** the inner surface (44) in a rotary angle region of the container door (1) enclosing the closed position is disposed in projection on the plane determined by the axes of rotation (15, 16), at least in the region between the axes of rotation (15, 16).

11. Container door according to one of Claims 1 to 10, a pin member which is connected to the hinge member in a rotationally resistant manner being located with respect to the door-side axis of rotation, the pin member being formed to be non-round in cross-section, **characterised in that** the pin member (46) engages against a spring member (47) secured to the door, which spring member is distorted by the pin member (46) in dependence on the angle of rotation between the pin member (46) and the container door (1).

12. Container door according to Claim 11, **characterised in that** the hinge member (14) passes through the outer edge of the container door (1) and **in that** the spring member (47) is formed as a flat spring which engages with a flat side against the pin member (46).

13. Container door according to one of Claims 11 or 12, **characterised in that** the spring member (47) is secured at two ends within the container door (1).

14. Container door according to one of Claims 11 to 13, **characterised in that** the non-round cross-section of the pin member (44) is aligned relative to the hinge member (14) so that it effects a minimal distortion of the spring member (47) in a closed position of the container door (1) and/or **in that** it effects a maximal distortion of the spring member (47) in an open position of the container door (1).

15. Container door according to one of Claims 11 to 14, **characterised in that** for a displacement of the container door (1) starting from the open position, there is no rotation of the pin member (46) relative to the container door (1), until the cam (32) enters into engagement with the box structure (2).

## Revendications

1. Porte d'espace de chargement (1) ayant une paroi interne (7) tournée vers l'espace de chargement en position fermée, une paroi externe (8) et des parois d'extrémité (9, 10, 11, 12), une charnière (13) étant disposée sur le bord externe de la porte d'espace de chargement (1) au moyen d'un élément de charnière (14) pouvant tourner autour de deux axes de rotation et la porte d'espace de chargement (1) présentant une paroi d'étanchéisation (37) qui, aidée d'une contre-paroi, est destinée à garantir l'étanchéité, **caractérisée en ce qu'**un ergot (32) est formé sur la paroi d'extrémité (10) côté charnière pour un dispositif sur une surface de dispositif (42) de la carrosserie en caisson (2), ledit ergot dépassant d'une face latérale (43) par rapport à la paroi d'extrémité (10) côté charnière, dans une direction perpendiculaire à la paroi d'extrémité (10) côté charnière.

2. Porte d'espace de chargement selon la revendication 1, **caractérisée en ce que** l'ergot (32) présente une face interne (44) tournée vers l'espace de chargement (2) en position fermée, ladite face interne se transformant en arête d'extrémité (45) dans la face latérale (43), et **caractérisée en ce que** la face latérale (43) s'étend à partir de l'arête (45) en se superposant au moins partiellement à la paroi d'extrémité (10).

3. Porte d'espace de chargement selon la revendication 2, **caractérisée en ce que** la face interne (44) fait saillie, perpendiculairement à la paroi interne (7), au-dessus de la paroi interne (7).

4. Porte d'espace de chargement selon l'une des revendications précédentes, **caractérisée en ce que** l'ergot (32) est disposé en extension principale de la paroi d'extrémité (10) côté charnière, dans une zone d'extrémité de cette paroi d'extrémité (10).

5. Porte d'espace de chargement selon l'une des revendications 2 à 4, **caractérisée en ce que** la paroi d'étanchéisation (37) en position fermée est disposée sur un même plan que la face interne (44) de l'ergot (32).

6. Porte d'espace de chargement selon l'une des revendications 1 à 4, **caractérisée en ce que** la paroi latérale (43) fait office de paroi d'étanchéisation (37).

7. Porte d'espace de chargement selon l'une des revendications précédentes, **caractérisée en ce que** l'ergot (32) est fermé en profilé filé.

8. Porte d'espace de chargement selon l'une des revendications précédentes, **caractérisée en ce que** l'ergot (32) est relié à un profilé de bord (20) de la porte d'espace de chargement (1).

9. Porte d'espace chargement selon l'une des revendications précédentes, **caractérisée en ce que** l'ergot (32) est en matière plastique.

10. Porte d'espace de chargement selon l'une des revendications 2 à 9, **caractérisée en ce que** l'élément de charnière (14) équipe le bord externe de la porte d'espace de chargement de deux axes de rotation (15, 16), et **en ce que** la face interne (44) est disposée dans une zone angulaire de rotation incluant la position fermée de la porte d'espace de chargement (1) en projection sur le plan défini par les axes de rotation (15, 16), au moins en partie par zones entre les axes de rotation (15, 16).

11. Porte d'espace de chargement (1) selon l'une des revendications 1 à 10, un membre d'axe rigide en torsion étant relié à l'axe de rotation côté porte et à l'élément de charnière, ledit membre d'axe possédant une section transversale non circulaire, **caractérisée en ce que** le membre d'axe (46) est adjacent à un élément élastique (47) fixé côté porte, ledit élément élastique subissant une déformation au moyen du membre d'axe (46) dépendant de l'angle de rotation entre le membre d'axe (46) et la porte d'espace de chargement (1).

12. Porte d'espace de chargement selon la revendication 11, **caractérisée en ce que** l'élément de charnière (14) recouvre le bord externe de la porte d'espace de chargement (1), et **en ce que** l'élément élastique (47) est un ressort plat, ledit ressort étant adjacent, par une face plane, au membre d'axe (46).

13. Porte d'espace de chargement selon la revendication 11 ou 12, **caractérisé en ce que** l'élément élastique (47) est fixé à deux extrémités à l'intérieur de la porte d'espace de chargement (1).

14. Porte d'espace de chargement selon l'une des revendications 11 à 13, **caractérisée en ce que** la section transversale non circulaire du membre d'axe (46) est orientée par rapport à l'élément de charnière (14) de telle sorte que, en position fermée de la porte d'espace de chargement (1), il exerce une déformation minimale de l'élément élastique (47) et/ou, dans une position ouverte de la porte d'espace de chargement (1), il exerce une déformation maximale de l'élément élastique (47).

15. Porte d'espace de chargement selon l'une des revendications 11 à 14, **caractérisée en ce que** lors d'un déplacement de la porte d'espace de chargement (1) depuis la position ouverte, il ne se produit aucune rotation du membre d'axe (46) par rapport à la porte d'espace de chargement (1), jusqu'à ce que l'ergot (32) arrive à proximité de la carrosserie en caisson (2).
